# EUROPEAN PATENT SPECIFICATION

(11) **EP 2 144 460 B1**
(45) Date of publication and mention of the grant of the patent: **11.11.2015**
(21) Application number: 08160082.7
(22) Date of filing: 10.07.2008
(51) Int. Cl.: H04W 12/08, H04L 29/06, H04L 12/46

(54) **Method, system, packet data gateway and computer program for providing connection for data delivery**
Verfahren, System, Paketdaten-Gateway und Computerprogramm zur Bereitstellung einer Verbindung für die Datenlieferung
Procédé, système, passerelle de données en paquets et programme informatique pour fournir une connexion pour la livraison de données

(43) Date of publication of application: 13.01.2010
(73) Proprietor: TeliaSonera AB, 10663 Stockholm (SE)
(72) Inventor: Erkkilä, Antti, 01600, Vantaa (FI)
(74) Representative: Kolster Oy Ab

(56) References cited:
- EP-A- 1 176 781
- EP-A- 1 494 428
- US-A1- 2006 155 822
- CHUAH M C ET AL: "MOBILE VIRTUAL PRIVATE DIAL-UP SERVICES" BELL LABS TECHNICAL JOURNAL, WILEY, CA, US, vol. 4, no. 3, 1 July 1999 (1999-07-01), pages 51-72, XP000878197 ISSN: 1089-7089

## Description

### Field

The invention relates to a method, system, packet data gateway and computer program for providing a connection for data delivery.

### Background

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

Nowadays more and more people use or at least would like to use web services, such as Internet services, remotely and in the location where they currently happen to be. Communication needs do not necessarily depend on user's whereabouts.

EP 1176781 discloses a VPN system in mobile IP network, wherein a home authentication server extracts from the VPN database the VPV information of a user who has requested the authentication at the time of making a position registration request from the mobile terminal.

Creating a remote access from e.g. a mobile device to another communication device typically requires quite a lot of expertise from a user. Access to a communication device via a web access typically requires that a web address (such as an Internet Protocol address) of the communication device be known.

### Brief Description

According to an aspect of the present invention, there is provided a method for providing a connection for data delivery in a communication system comprising at least two communication devices, a packet data gateway, and an authentication server, the method comprising: requesting a virtual private network tunnel connection by a first communication device, requesting a virtual private network tunnel connection by a second communication device, establishing the virtual private network tunnels by using an authentication procedure, the authentication procedure producing user identification information, mapping (the user identification information and a predetermined web address of each communication device and storing the mapped information in a mapping data base, checking predetermined access allowance information from the mapping data base and if the communication devices are allowed to access each other, transmitting data between the communication devices via a packet data gateway.

According to another aspect of the present invention, there is provided a communication system for providing a connection for data delivery, the system comprising: a packet data gateway configured to: request authentication information in connection with creating a virtual private network tunnel for a first and second communication devices, transmit the authentication information to an authentication server, transmit user identification information obtained by using the authentication information and predetermined web addresses of the communication devices to a mapping data base, transmit virtual private connection acceptance messages to the communication devices, receive a request for transmission services for data delivery, check allowance information in the mapping data base, and transmit data to at least one of the communication devices, an authentication server configured to: retrieve predetermined user identification information on the basis of the authentication information, and transmit the user identification information to a mapping data base, and a mapping data base configured to: store the user identification information and the web addresses of each of the communication devices as mapped information.

According to another aspect of the present invention, there is provided a packet data gateway comprising: means for requesting authentication information in connection with creating a virtual private network tunnel for at least two communication devices, for transmitting the authentication information to an authentication server, transmitting user identification information obtained by using the authentication information and web addresses of the communication devices to a mapping data base, transmitting virtual private connection acceptance messages to the communication devices, and transmitting data, and for receiving a request for transmission services for data delivery to at least one of the communication devices.

According to another aspect of the present invention, there is provided a computer program encoding a computer program of instructions for executing a computer process characterized by comprising: requesting authentication information in connection with creating a virtual private network tunnel for a first and second communication devices, transmitting the authentication information to an authentication server; receiving user identification information and a web addresses of the communication devices from the authentication server; transmitting the user identification information and the web addresses of the communication devices to a mapping data base; transmitting virtual private connection acceptance messages to the communication devices; receiving a request for transmission services for data delivery to at least one of the communication devices, checking allowance information from the mapping data base, and if the communication device is allowed to access the at least one of the communication devices, transmitting data.

### List of drawings

Embodiments of the present invention are described below, by way of example only, with reference to the accompanying drawings, in which
Figure 1 illustrates an example of a communication system;
Figure 2 is a flow chart;
Figure 3 illustrates an example of a packet data gateway; and

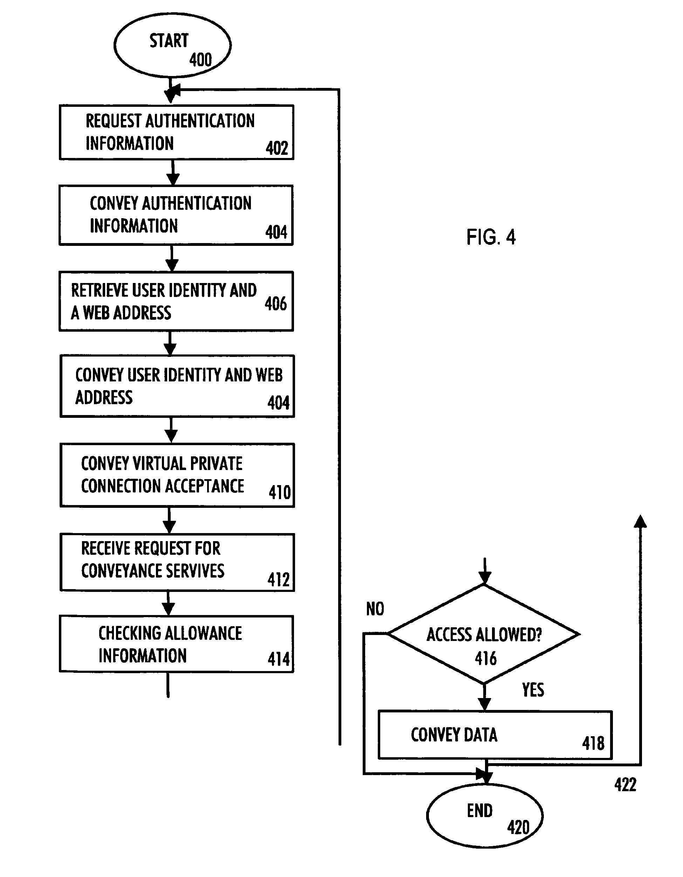

Figure 4 is another flow chart.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Embodiments are applicable to any user terminal, server, corresponding component, and/or to any communication system or any combination of different communication systems that support required functionality.

The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, embodiments.

In the following, different embodiments will be described using, as an example of a system architecture to which the embodiments may be applied, an architecture based on a system enabled to provide a Virtual Private Network (VPN) tunnel for packet transmission, such as an Internet Key Exchange protocol version 2 (IKEv2) Internet Protocol Security (IPSec) VPN tunnel.

Many different radio protocols to be used in communications systems for establishing a wireless connection exist. Some examples of different communication systems are Global System for Mobile Communications (GSM), the Universal Mobile Telecommunications System (UMTS) radio access network (UTRAN or E-UTRAN), Long Term Evolution (LTE, the same as E-UTRA), Wireless Local Area Network (WLAN), Worldwide Interoperability for Microwave Access (WiMAX), Bluetooth®, Personal Communications Services (PCS) and systems using ultra-wideband (UWB) technology.

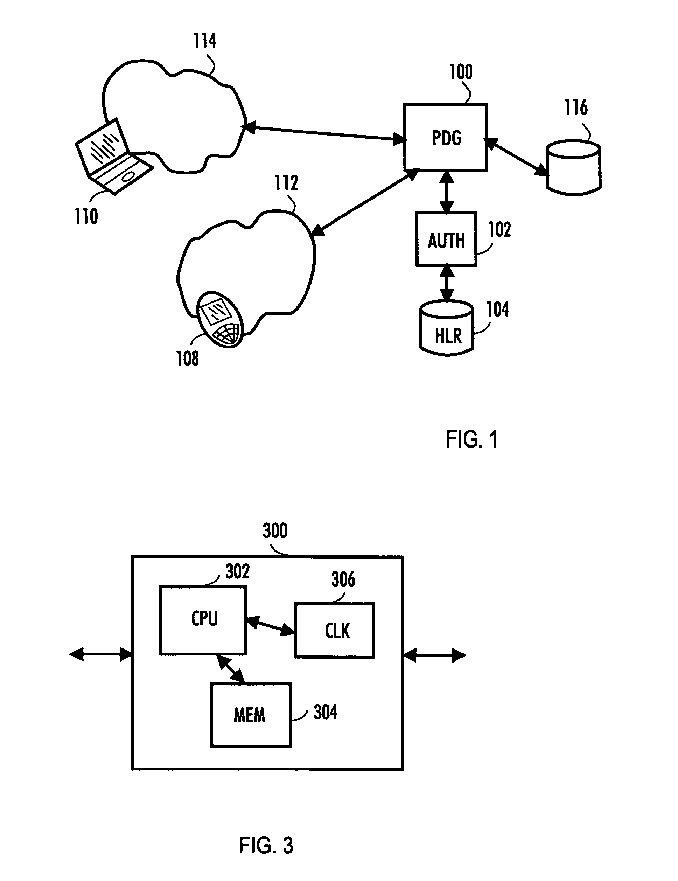

Figure 1 is a simplified system architecture only showing some elements and functional entities, all being logical units whose implementation may differ from what is shown. The connections shown in Figure 1 depict logical connections; the actual physical connections may be different. It is apparent to a person skilled in the art that the systems also comprise other functions and structures.

Figure 1 shows a part of architecture for communication over a web, such as the Internet. The cellular radio system providing connections over a radio path is not described, since radio protocols used are not relevant regarding the embodiments of the invention.

The embodiments are not, however, restricted to the system given as an example but a person skilled in the art may apply the solution to other communication systems provided with the necessary properties.

The example of the system is first explained only shortly.

A communications system operator maintains a gateway server, such as a Packet Data Gateway (PDG) 100. The Packet Data Gateway acts as a Virtual Private Network (VPN) gateway. The Virtual Private Network (VPN) is a computer-based network in which selected connections between nodes are carried out by virtual circuits which thus perform a part of a larger network, such as the Internet. The link-layer protocols of the virtual network are usually tunnelled via the larger network. VPNs may be used to separate traffic of different user communities over an underlying network.

The operator maintains an authentication server, such as an Extensible Authentication Protocol Subscriber Identity Module (EAP-SIM) server 102. EAP is a universal authentication framework mostly used in wireless networks and Point-to-Point connections. EAP-SIM is a protocol mechanism designed for authentication and session key distribution using a Subscriber Identity Module (SIM).

In this example, the operator also maintains a mapping database for storing information in a mapped form.

Home Location Register (HLR) 104 may also be available. HLR is a database containing information on subscribers. Home Location Register typically stores subscriber information permanently.

In this example, a first communication device 108 is a mobile device in a network 112 and a second communication device 110 is a computer located in a remote place, such as home or office using a network 114. The networks 110 and 114 may be the same or different networks and they may contain one or more networks.

One problem with the conventional Virtual Private Network concept is that a service allowing two or more remote hosts to communicate with each other is not provided. No linking means exist. Instead, the remote hosts have to know each other's IP addresses. This is typically a challenging task, not least due to the use of dynamic web addresses. Further, access control is not provided either. Thus, remarkable security risks exist.

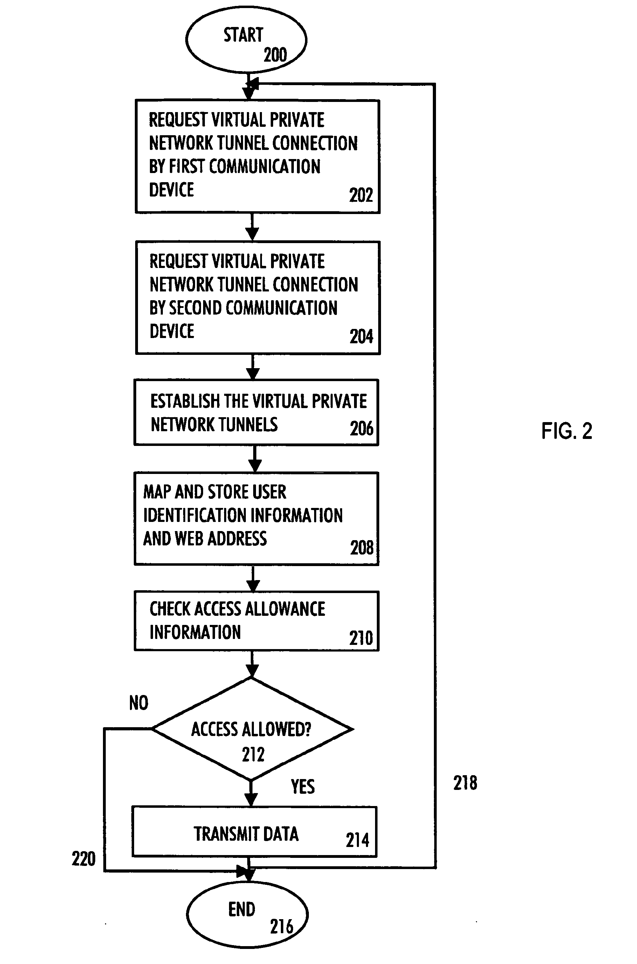

An embodiment of a method for providing a connection for data delivery in a communication system is now explained by means of Figure 2. The communication system includes at least two communication devices, a packet data gateway, and an authentication server. The embodiment starts in block 200.

In block 202, a virtual private network tunnel connection is requested by a first communication device.

In block 204, a virtual private network tunnel connection is requested by a second communication device.

A communication device may be a mobile phone, smartphone, personal digital assistant (PDA), handset, multimedia device, game console, laptop (a notebook), etc.

In block 206, the virtual private network tunnels are established by using an authentication procedure, the authentication procedure producing user identification information. The authentication is typically based on authentication information. The authentication information may include user identification and also a password stored on a subscriber identity module (SIM) or on another kind of a module including identity information. A SIM is typically a part of a removable smart card, such as an Integrated Circuit Card. SIM cards are used in mobile devices, such as mobile computers and mobile phones. SIM cards store information for identification of a subscriber, such as an International Mobile Subscriber Identity (IMSI), Authentication Key (Ki) and Local Area Identity (LAI).

The equivalent of a SIM in the UMTS is called a Universal Subscriber Identity Module (USIM), and in CDMA-based system a Removable User Identity Module (RUIM). A SIM card may also have integrated core components of a wireless radio device, such as the radio receiver/transmitter.

In this application, a SIM means all modules including identity or identification information.

The authentication is typically carried out by an authentication server, such as an Extensible Authentication Protocol Subscriber Identity Module (EAP-SIM) server. The authentication server retrieves predetermined user identification information on the basis of the authentication information.

The authentication server may retrieve the information from a Home Location Register (HLR). HLR is usually designed to be able to return subscriber's profile and other subscriber information when requested by using IMSI. The same applies to security information. A Mobile Subscriber International Integrated Services Digital Network number (MSISDN) is used for service separation of the same user. MSISDN consists of a country code, national destination code and subscriber number.

In an embodiment, an MSISDN is at least part of the user identification information.

Further, the communication device may have a primary subscriber identity module and a receiving device may have a second subscriber identity module comprising at least part of the subscriber information of the primary subscriber identity module. This second subscriber identity module provides parallel SIM functionalities: one number for two or more devices. This service option may be provided by a so-called multi-SIM.

In block 208, the user identification information and a predetermined web address of each communication device is mapped and stored as mapped information in a mapping data base. Thus, a data record in a mapping data base in relation to a communication device or a session includes user identification information and a web address. An example of a web address is an IP address. The IP address is designed to act as a locator for an IP device for enabling interaction between the network and the device. A mapping data base may be a separate data base or a part of another data base.

In block 210, predetermined access allowance information is checked from the mapping data base. Typically, the packet data gateway checks the access allowance information. The communication devices may have prepared a list of hosts or nodes allowed to communicate with it. The access allowance information may include a mobile subscriber international integrated services digital network number (MSISDN).

Usually, an operator provides a user interface application for preparation and/or updating the allowance information list. The user interface application may be an icon to a network service or a short message service (SMS), etc. The application provides interactive access to the list by a user interface application. The list including the access allowance information is typically up-datable by a user of a communication device receiving the data transmission.

If the communication devices are allowed to access each other (block 212), data between the communication devices is transmitted via a packet data gateway (block 214). Arrow 220 illustrates how data is not transmitted if access to a receiver communication device is denied.

The embodiment ends in block 216. The embodiment is repeatable for instance in a manner shown by arrow 218.

It should be noticed, that the server operations illustrate a procedure that may be implemented in one or more physical or logical entities. The signaling messages are only exemplary and may even comprise several separate messages for transmitting the same information. In addition, the messages may also contain other information.

The steps/points, signaling messages and related functions described above in Figure 2 are in no absolute chronological order, and some of the steps/points may be performed simultaneously or in an order differing from the given one. Other functions can also be executed between the steps/points or within the steps/points and other signaling messages sent between the illustrated messages. Some of the steps/points or part of the steps/points can also be left out or replaced by a corresponding step/point or part of the step/point.

An embodiment from the network's point of view will now be explained.

A packet data gateway requests authentication information in connection with creating a Virtual Private Network tunnel for a communication device. The Packet Data Gateway acts as a Virtual Private Network (VPN) gateway.

The authentication information may include user identification and also a password stored on a subscriber identity module (SIM) or on another kind of a module including identity information. In this application, a SIM means all modules including identity or identification information not depending on the communication system.

A communication device may be a mobile phone, smartphone, personal digital assistant (PDA), handset, multimedia device, game console, laptop (a notebook), etc.

The packet data gateway transmits the authentication information to an authentication server, such as an Extensible Authentication Protocol Subscriber Identity Module (EAP-SIM) server.

The authentication server retrieves predetermined user identification information on the basis of the authentication information.

The authentication server may retrieve the information from a Home Location Register (HLR). A Mobile Subscriber International Integrated Services Digital Network number (MSISDN) is used for service separation of the same user. In an embodiment, an MSISDN is at least part of the user identification information.

The user identification information and a predetermined web address of the communication device are transmitted to a mapping data base (116 in the example of Figure 1) by the authentication server and the packet data gateway.

The functional counterpart for an MSISDN is a Packet data Protocol (PDP) context address, which is an IP address of a mobile user. The PDP context address may be, corresponding to common IP addresses, either dynamic or static. A dynamic address is typically created as a part of the creation of a packet session. A static address is defined in the HLR.

In an embodiment, the authentication server retrieves the user identification information and the web address, either dynamic or static, from the HLR and sends them to the packet data gateway, which then sends them to the mapping data base.

The user identification information and the web address of the communication device are stored in the mapping data base as mapped information. This means that these two pieces of information are mapped together.

The packet data gateway transmits a virtual private connection acceptance message to the communication device.

The packet data gateway receives a request for transmission services for data delivery to at least one named receiver device. This message is sent by a communication device requesting data transmission services to one or more receiver communication devices.

Before data delivery, typically, the at least one receiver communication device has also established a VPN tunnel in a manner similar to the one explained above.

The communication devices may have prepared a list of hosts or nodes allowed to communicate with it. Thus, the list includes access allowance information. The access allowance information may include a mobile subscriber international integrated services digital network number (MSISDN).

Usually, an operator provides a user interface application for preparing and/or updating the allowance information list. The user interface application may be an icon to a network service or a short message service (SMS), etc. The access allowance information may be stored in the mapping data base. The application provides interactive access to the list.

The packet data gateway typically checks access allowance information from the mapping data base. If the communication device is allowed to access the receiver communication device, the packet data gateway transmits the data to the receiver communication device. Thus the packet data gateway may provide data transmission security and access security services.

It should be noticed that the server operations illustrate a procedure that may be implemented in one or more physical or logical entities. The signaling messages are only exemplary and may even comprise several separate messages for transmitting the same information. In addition, the messages may also contain other information.

Embodiments provide a data delivery service wherein the data between hosts or nodes is end-to-end encrypted. Furthermore, the data delivery is not affected by firewall settings of the receiver end. Data transmission security and access security services may be provided by a packet data gateway server, that is to say the operator. Additionally, remote hosts do not have to know each other's web addresses.

Embodiments described above may be implemented in the following system described as a example: the system comprises a packet data gateway configured to: request authentication information in connection with creating a virtual private network tunnel for a first and second communication devices, transmit the authentication information to an authentication server, transmit user identification information obtained by using the authentication information and predetermined web addresses of the communication devices to a mapping data base, transmit virtual private connection acceptance messages to the communication devices, receive a request for transmission services for data delivery, check allowance information in the mapping data base, and transmit the data to at least one of the communication devices.

The system comprises an authentication server configured to: retrieve predetermined user identification information on the basis of the authentication information, and transmit the user identification information to a mapping data base.

The system further comprises a mapping data base configured to: store the user identification information and the web addresses of each of the communication devices as mapped information.

Next, an example of mapping is explained in further detail. The example is taken herein only for clarification purposes and it does not limit the implementation of embodiments by any means.

A VPN tunnel is established for Host 1 using a SIM-card. The Host 1 is given an IP address 10.10.10.1. Authentication information is MSISDN of Host 1, which is in this case 35840123. The mapping data base looks as follows:

**Table 1.**

| **User** | **IP** |
|---|---|
| 35840123 | 10.10.10.1 |

A VPN tunnel is established for Host 2, whose IP address is 10.10.10.2 and MSISDN is 35840111.

The mapping data base looks now as follows:

**Table 2.**

| **User** | **IP** |
|---|---|
| 35840111 | 10.10.10.2 |
| 35840123 | 10.10.10.1 |

Host 1 and Host 3 are allowed to deliver data to Host 2. The mapping data base looks as follows:

**Table 3.**

| **User** | **IP** | **Allowed users** |
|---|---|---|
| 35840111 | 10.10.10.2 | 35840123, <Host 3 MSIDN> |
| 35840123 | 10.10.10.1 | - |

When Host 1 requires data delivery service to Host 2, a PDG consults the mapping data base for information on IP address of Host 2 and allowance settings. If Host 1 had not been on the allowance list of Host 2, data delivery would have been cancelled and Host 1 would have been informed.

Figure 3 is a block diagram of an apparatus according to an embodiment of the invention. Although the apparatus has been depicted as one entity, different modules may be implemented in one or more physical or logical entities. The apparatus of this example is a packet data gateway which is typically a host or a node acting as a gateway server for packet data.

The packet data gateway (server) 300 may be implemented as an electronic digital computer, which may comprise a working memory (RAM) 304, a central processing unit (CPU) 302, and a system clock 306. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary, depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

The packet data gateway 300 of an embodiment comprises means 302 for requesting authentication information in connection with creating a virtual private network tunnel for at least two communication devices, means 302 for transmitting the authentication information to an authentication server, transmitting user identification information obtained by using the authentication information and web addresses of the communication devices to a mapping data base, transmitting virtual private connection acceptance messages to the communication devices, and transmitting data, and means 302 for receiving a request for transmission services for data delivery to at least one named communication device.

Also the authentication server may be implemented as an electronic digital computer.

An embodiment provides a computer program embodied on a distribution medium which starts in block 400, comprising program instructions which, when loaded into an electronic apparatus, constitute the following server functions: requesting (block 402) authentication information in connection with creating a virtual private network tunnel for a first and second communication devices, transmitting (block 404) the authentication information to an authentication server, receiving (block 406) user identification information and web addresses of the communication devices from the authentication server, transmitting (block 408) the user identification information and the web addresses of the communication devices to a mapping data base, transmitting (block 410) virtual private connection acceptance messages to the communication devices, receiving (block 412) a request for transmission services for data delivery to at least one of the communication devices, checking (block 414) allowance information from the mapping data base, and if (block 416) the communication device is allowed to access the at least one of the communication devices, transmitting (block 418) the data.

The computer program embodiment ends in block 420.

The computer program is repeatable. Arrow 422 shows one example for repetition.

The computer program may be in source code form, object code form, or in some intermediate form, and it may be stored in some sort of carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital computer or it may be distributed amongst a number of computers.

The techniques described herein may be implemented by various means. For example, these techniques may be implemented in hardware (one or more devices), firmware (one or more devices), software (one or more modules), or combinations thereof. For a hardware implementation, the apparatus may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g., procedures, functions, and so on) that perform the functions described herein. The software codes may be stored in a memory unit and executed by processors. The memory unit may be implemented within the processor or externally to the processor. In the latter case it can be communicatively coupled to the processor via various means, as is known in the art. Additionally, the components of systems described herein may be rearranged and/or complimented by additional components in order to facilitate achieving the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The invention and its embodiments are not limited to the examples described above but may vary within the scope of the claims.

## Claims

1. A method for providing a connection for data delivery in a communication system comprising at least two communication devices, a packet data gateway, and an authentication server, the method **characterized by** comprising:
requesting (202) a virtual private network tunnel connection by a first communication device;
requesting (204) a virtual private network tunnel connection by a second communication device;
establishing (206) the virtual private network tunnels by using an authentication procedure, the authentication procedure producing user identification information;
mapping (208) the user identification information and a predetermined web address of each communication device and storing the mapped information in a mapping data base;
checking (210) predetermined access allowance information from the mapping data base; and
if the communication devices are allowed to access each other,
transmitting (214) data between the communication devices via a packet data gateway.

2. The method of claim 1, **characterized in that** a mobile subscriber international integrated services digital network number (MSISDN) is at least part of the user identification.

3. The method of claims 1 or 2, **characterized in that** the authentication information is stored on a subscriber identity module.

4. The method of claim 3, **characterized in that** the communication device has a primary subscriber identity module and a receiver device has a second subscriber identity module comprising at least part of the subscriber information of the primary subscriber identity module.

5. The method of claims 1 to 4, **characterized in that** the authentication server is an extensible authentication protocol subscriber identity module (EAP-SIM) server.

6. The method of claims 1 to 5, **characterized in that** the authentication information includes user identification and a password.

7. The method of claims 1 to 6, **characterized in that** the access allowance information is stored as an up-datable list.

8. The method of claim 7, **characterized in that** the list including the access allowance information is up-datable by a user of a communication device receiving the data transmission and by using a separate application.

9. The method of claim 7 or 8, **characterized in that** the access allowance information includes a mobile subscriber international integrated services digital network number (MSISDN).

10. The method of claims 7 to 9, **characterized by** comprising:
providing a user interface for preparing and/or updating the allowance information list.

11. The method of claims 1 to 10, **characterized by** comprising:
providing data transmission security and access security services by the packet data gateway.

12. A communication system for providing a connection for data delivery, the system being **characterized by** comprising:
a packet data gateway (100) configured to: request authentication information in connection with creating a virtual private network tunnel for a first and second communication devices, transmit the authentication information to an authentication server, transmit user identification information obtained by using the authentication information and predetermined web addresses of the communication devices to a mapping data base, transmit virtual private connection acceptance messages to the communication devices, receive a request for transmission services for data delivery, check allowance information in the mapping data base, and transmit data to at least one of the communication devices;
an authentication server (102) configured to: retrieve predetermined user identification information on the basis of the authentication information, and transmit the user identification information to a mapping data base; and
a mapping data base (116) configured to: store the user identification information and the web addresses of each of the communication devices as mapped information.

13. The system of claim 12, **characterized in that** a mobile subscriber international integrated services digital network number (MSISDN) is at least part of the user identification.

14. The system of claims 12 or 13, **characterized in that** the authentication information is stored on a subscriber identity module.

15. The system of claim 14, **characterized in that** the communication device has a primary subscriber identity module and a receiver device has a second subscriber identity module comprising at least part of the subscriber information of the primary subscriber identity module.

16. The system of claims 12 to 15, **characterized in that** the authentication server is an extensible authentication protocol subscriber identity module (EAP-SIM) server.

17. The system of claims 12 to 16, **characterized in that** the authentication information includes user identification and a password.

18. The system of claims 12 to 17, **characterized in that** the access allowance information is stored as an up-datable list in a mapping data base.

19. The system of claim 18, **characterized in that** the list including the access allowance information is up-datable by a user of a communication device receiving the data transmission and by using a separate application.

20. The system of claim 18 or 19, **characterized in that** the access allowance information includes a mobile subscriber international integrated services digital network number (MSISDN).

21. The system of claims 18 to 20, **characterized by** being configured to:
provide a user interface for preparing and/or updating the allowance information list.

22. The system of claims 12 to 21, **characterized by** being configured to:
provide data transmission security and access security services by the packet data gateway.

23. A packet data gateway, **characterized by** comprising:
means (302) for requesting authentication information in connection with creating a virtual private network tunnel for at least two communication devices;
means (302) for transmitting the authentication information to an authentication server, transmitting user identification information obtained by using the authentication information and web addresses of the communication devices to a mapping data base, transmitting virtual private connection acceptance messages to the communication devices, and transmitting data; and
means (302) for receiving a request for transmission services for data delivery to at least one of the communication devices.

24. The packet data gateway of claim 23, **characterized in that** a mobile subscriber international integrated services digital network number (MSISDN) is at least part of the user identification.

25. The packet data gateway of claims 23 or 24, **characterized in that** the authentication information includes user identification and a password.

26. The packet data gateway of claims 23 to 25, **characterized by** comprising:
means (302) for providing a user interface for preparing and/or updating an access allowance information list said list defining to which receiver communication devices data transmission is allowable and said list being stored in the mapping data base.

27. The packet data gateway of claims 23 to 26, **characterized by** comprising:
means (302) for providing data transmission security and access security services.

28. A computer program encoding a computer program of instructions for executing a computer process **characterized by** comprising:
requesting (402) authentication information in connection with creating a virtual private network tunnel for a first and second communication devices;
transmitting (404) the authentication information to an authentication server;
receiving (406) user identification information and a web addresses of the communication devices from the authentication server;
transmitting (408) the user identification information and the web addresses of the communication devices to a mapping data base;
transmitting (410) virtual private connection acceptance messages to the communication devices;
receiving (412) a request for transmission services for data delivery to at least one of the communication devices;
checking (414) allowance information from the mapping data base; and
if (416) the communication device is allowed to access the at least one of the communication devices,
transmitting (418) data.

29. The computer program of claim 28, **characterized in that** the authentication information includes user identification and a password.

30. The computer program of claims 28 or 29, **characterized by** comprising:
providing a user interface for preparing and/ or updating an access allowance information list, said list defining to which receiver communication devices data transmission is allowable and said list being stored in the mapping data base.

31. The computer program of claims 28 to 30, **characterized by** comprising:
providing data transmission security and access security services.

## Patentansprüche

1. Verfahren zum Bereitstellen einer Verbindung für eine Datenlieferung in einem Kommunikationssystem umfassend mindestens zwei Kommunikationsvorrichtungen, ein Paketdaten-Gateway und einen Authentifizierungsserver, wobei das Verfahren **dadurch gekennzeichnet ist, dass** das Verfahren umfasst:
Anfordern (202) von einer virtuellen privaten Netzwerk-Tunnelverbindung durch eine erste Kommunikationsvorrichtung;
Anfordern (204) von einer virtuellen privaten Netzwerk-Tunnelverbindung durch eine zweite Kommunikationsvorrichtung;
Herstellen (206) des virtuellen privaten Netzwerk-Tunnels unter Verwendung von einem Authentifizierungsprozess, wobei der Authentifizierungsprozess Benutzer-Identifizierungsinformationen erzeugt;
Abbilden (208) der Benutzer-Identifikationsinformation und einer vorgegebenen Internetadresse von jeder Kommunikationsvorrichtung und
Speichern der abgebildeten Informationen in einer Abbildungs-Datenbank;
Prüfen (210) von vorgegebener Zugriffszulassungsinformation aus der Abbildungs-Datenbank; und
wenn es den Kommunikationsvorrichtungen erlaubt wird, aufeinander zuzugreifen,
Übertragen (214) von Daten zwischen den Kommunikationsvorrichtungen über ein Paketdaten-Gateway.

2. Verfahren nach Anspruch 1, **dadurch gekennzeichnet, dass** eine Mobile Subscriber Integrated Services Digital Network Nummer (MSISDN) zumindest ein Teil der Benutzeridentifikation ist.

3. Verfahren nach einem der Ansprüchen 1 oder 2, **dadurch gekennzeichnet, dass** die Authentifizierungsinformation in einem Teilnehmeridentitätsmodul gespeichert ist.

4. Verfahren nach Anspruch 3, **dadurch gekennzeichnet, dass** die Kommunikationsvorrichtung ein primäres Teilnehmeridentitätsmodul aufweist und eine Empfängervorrichtung ein zweites Teilnehmeridentitätsmodul aufweist, das zumindest einen Teil der Teilnehmerinformation des primären Teilnehmeridentitätsmoduls umfasst.

5. Verfahren nach einem der Ansprüche 1 bis 4, **dadurch gekennzeichnet, dass** der Authentifizierungsserver ein Extensible Authentication Protocol Teilnehmeridentitätsmodul (EAP-SIM) Server ist.

6. Verfahren nach einem der Ansprüche 1 bis 5, **dadurch gekennzeichnet, dass** die Authentifizierungsinformation eine Benutzerkennung und ein Passwort umfasst.

7. Verfahren nach einem der Ansprüche 1 bis 6, **dadurch gekennzeichnet, dass** die Zugriffszulassungsinformation als aktualisierbare Liste gespeichert wird.

8. Verfahren nach Anspruch 7, **dadurch gekennzeichnet, dass** die Liste umfassend die Zugriffszulassungsinformation aktualisierbar ist durch einen Benutzer einer Kommunikationsvorrichtung, die die Datenübertragung empfängt, und durch Nutzung einer separaten Anwendung.

9. Verfahren nach Anspruch 7 oder 8, **dadurch gekennzeichnet, dass** die Zugriffszulassungsinformation eine Mobile Subscriber Integrated Services Digital Network Nummer (MSISDN) umfasst.

10. Verfahren nach einem der Ansprüche 7 bis 9, **dadurch gekennzeichnet, dass** das Verfahren umfasst:
Bereitstellen einer Benutzerschnittstelle für die Vorbereitung und / oder die Aktualisierung der Zugriffsinformationsliste.

11. Verfahren nach einem der Ansprüche 1 bis 10, **dadurch gekennzeichnet, dass** das Verfahren umfasst:
Bereitstellen von Datenübertragungssicherheit und Zugriffssicherheitsdienste durch das Paketdaten-Gateway.

12. Kommunikationssystem zum Bereitstellen einer Verbindung für die Datenlieferung, wobei das System **dadurch gekennzeichnet ist, dass** das System umfasst:
ein Paketdaten-Gateway (100) eingerichtet zum:
Anfordern von Authentifizierungsinformation in Verbindung mit der Erstellung eines virtuellen privaten Netzwerk-Tunnels für eine erste und eine zweite Kommunikationsvorrichtung,
Übertragen der Authentifizierungsinformation an einen Authentifizierungsserver,
Übertragen von Benutzeridentifikationsinformation, die aus der Authentifizierungsinformation gewonnen ist, und vorgegebenen Internetadressen der Kommunikationsvorrichtungen zu einer Abbildungs-Datenbank,
Übertragen von virtuell privaten Verbindungsannahme-Nachrichten an die Kommunikationsvorrichtungen,
Empfangen einer Aufforderung für Übertragungsdienstleistungen für die Datenlieferung,
Prüfen von Zulassungsinformation in der Abbildungs-Datenbank, und Übertragen von Daten an mindestens eine der Kommunikationsvorrichtungen; einen Authentifizierungsserver (102) eingerichtet zum:
Abrufen von vorgegebener Benutzeridentifikationsinformation auf der Basis der Authentifizierungsinformation, und
Übertragen der Benutzeridentifikationsinformation zu einer Abbildungs-Datenbank; und
eine Abbildungs-Datenbank (116) eingerichtet zum:
Speichern der Benutzeridentifikationsinformation und der Internetadressen von jeder der Kommunikationsvorrichtungen als abgebildete Information.

13. System nach Anspruch 12, **dadurch gekennzeichnet, dass** eine Mobile Subscriber Integrated Services Digital Network Nummer (MSISDN) zumindest ein Teil der Benutzeridentifikation ist.

14. System nach einem der Ansprüche 12 oder 13, **dadurch gekennzeichnet, dass** die Authentifizierungsinformation in einem Teilnehmeridentitätsmodul gespeichert ist.

15. System nach Anspruch 14, **dadurch gekennzeichnet, dass** die Kommunikationsvorrichtung ein primäres Teilnehmeridentitätsmodul aufweist und eine Empfängervorrichtung ein zweites Teilnehmeridentitätsmodul aufweist, das zumindest einen Teil der Teilnehmerinformation des primären Teilnehmeridentitätsmoduls umfasst.

16. System nach einem der Ansprüche 12 bis 15, **dadurch gekennzeichnet, dass** der Authentifizierungsserver ein Extensible Authentication Protocol Teilnehmeridentitätsmodul (EAP-SIM) Server ist.

17. System nach einem der Ansprüche 12 bis 16, **dadurch gekennzeichnet, dass** die Authentifizierungsinformation eine Benutzerkennung und ein Passwort umfasst.

18. System nach einem der Ansprüche 12 bis 17, **dadurch gekennzeichnet, dass** die Zugriffszulassungsinformation als aktualisierbare Liste gespeichert ist.

19. System nach Anspruch 18, **dadurch gekennzeichnet, dass** die Liste umfassend die Zugriffszulassungsinformation aktualisierbar ist durch einen Benutzer einer Kommunikationsvorrichtung, die die Datenübertragung empfängt, und durch Nutzung einer separaten Anwendung.

20. System nach Anspruch 18 oder 19, **dadurch gekennzeichnet, dass** die Zugriffszulassungsinformation eine Mobile Subscriber Integrated Services Digital Network Nummer (MSISDN) umfasst.

21. System nach einem der Ansprüche 18 bis 20, **dadurch gekennzeichnet, dass** das System eingerichtet ist zum:
Bereitstellen einer Benutzerschnittstelle für die Vorbereitung und / oder die Aktualisierung der Zugriffsinformationsliste.

22. System nach einem der Ansprüche 12 bis 21, **dadurch gekennzeichnet, dass** das System eingerichtet ist zum:
Bereitstellen von Datenübertragungssicherheit und Zugriffssicherheitsdienste durch das Paketdaten-Gateway.

23. Paketdaten-Gateway, **dadurch gekennzeichnet, dass** das Paketdaten-Gateway umfasst:
Mittel (302) zum Anfordern einer Authentifizierungsinformation in Verbindung mit der Erstellung eines virtuellen privaten Netzwerk-Tunnels für mindestens zwei Kommunikationsvorrichtungen;
Mittel (302) zum Übertragen der Authentifizierungsinformation an einen Authentifizierungs-Server, Übertragen von Benutzeridentifikationsinformation gewonnen mittels der Authentifizierungsinformation und Internetdressen der Kommunikationsvorrichtungen an eine Abbildungs-Datenbank, Übertragen von virtuell privaten Verbindungsannahme-Nachrichten an die Kommunikationsvorrichtungen und Übertragen von Daten;
und
Mittel (302) zum Empfangen einer Anforderung für Übertragungsdienstleistungen für Datenlieferung an mindestens eine der Kommunikationsvorrichtungen.

24. Paketdaten-Gateway nach Anspruch 23, **dadurch gekennzeichnet**,
eine Mobile Subscriber Integrated Services Digital Network Nummer (MSISDN) zumindest ein Teil der Benutzeridentifikation ist.

25. Paketdaten-Gateway nach einem der Ansprüche 23 oder 24,
**dadurch gekennzeichnet, dass** die Authentifizierungsinformation eine Benutzerkennung und ein Passwort umfasst.

26. Paketdaten-Gateway nach einem der Ansprüche 23 bis 25, **gekennzeichnet durch**:
Mittel (302) zum Bereitstellen einer Benutzerschnittstelle für die Vorbereitung und / oder die Aktualisierung der Zugriffsinformationsliste; die definiert, mit welchen Empfänger-Kommunikationseinrichtungen die Datenübertragung zulässig ist, und wobei die Liste in der Abbildungs-Datenbank gespeichert ist.

27. Paketdaten-Gateway nach einem der Ansprüche 23 bis 26,
**gekennzeichnet durch**:
Bereitstellen von Datenübertragungssicherheit und Zugriffssicherheitsdienste durch das Paketdaten-Gateway.

28. Computerprogram, in dem Anweisungen zur Ausführung eines Computerprozesses codiert sind, **dadurch gekennzeichnet, dass** das Programm umfasst:
Anfordern (402) von Authentifizierungsinformation in Verbindung mit der Erstellung eines virtuellen privaten Netzwerk-Tunnels für eine erste und eine zweite Kommunikationsvorrichtung;
Übertragen (404) der Authentifizierungsinformation an einen Authentifizierungsserver;
Empfangen (406) von Benutzeridentifikationsinformation und Internetadressen der Kommunikationseinrichtungen von dem Authentifizierungsserver;
Übertragen (408) der Benutzeridentifikationsinformation und der Internetadressen der Kommunikationsvorrichtungen an eine Abbildungs-Datenbank;
Übertragen (410) von virtuell privaten Verbindungsannahme-Nachrichten an die Kommunikationsvorrichtungen;
Empfangen (412) von einer Anforderung für Übertragungsdienstleistungen für die Datenlieferung an zu mindestens eine der Kommunikationsvorrichtungen;
Prüfen (414) von Zulassungsinformation aus der Abbildungs-Datenbank; und
wenn (416) es der Kommunikationsvorrichtung erlaubt wird, zumindest auf die mindestens eine Kommunikationsvorrichtung zuzugreifen,
Übertragen (418) von Daten.

29. Computerprogramm nach Anspruch 28, **dadurch gekennzeichnet, dass** die Authentifizierungsinformation eine Benutzerkennung und ein Passwort umfasst.

30. Computerprogramm nach einem der Ansprüche 28 oder 29, **dadurch gekennzeichnet, dass** das Programm umfasst:
Bereitstellen einer Benutzerschnittstelle für die Vorbereitung und / oder die Aktualisierung der Zugriffsinformationsliste; die definiert, mit welchen Empfänger-Kommunikationseinrichtungen die Datenübertragung zulässig ist,
und wobei die Liste in der Abbildungs-Datenbank gespeichert ist.

31. Computerprogramm nach einem der Ansprüche 28 bis 30, **dadurch gekennzeichnet dass** das Programm umfasst:
Bereitstellen von Datenübertragungssicherheit und Zugriffssicherheitsdienste durch das Paketdaten-Gateway.

## Revendications

1. Procédé destiné à fournir une connexion pour la délivrance de données dans un système de communication qui comprend deux dispositifs de communication au moins, une passerelle de données en paquets, et un serveur d'authentification, le procédé étant **caractérisé par le fait qu'**il comprend les étapes consistant à :
demander (202) avec un premier dispositif de communication, une connexion tunnel de réseau privé virtuel ;
demander (204) avec un second dispositif de communication une connexion tunnel de réseau privé virtuel ;
établir (206) les tunnels de réseau privé virtuel à l'aide d'une procédure d'authentification, la procédure d'authentification produisant des informations d'identification d'utilisateur ;
mettre en correspondance (208) les informations d'identification d'utilisateur avec une adresse Web prédéterminée de chaque dispositif de communication, et stocker les informations mises en correspondance dans une base de données de mise en correspondance ;
vérifier (210) les informations d'attribution d'accès prédéterminées en provenance de la base de données de mise en correspondance ; et
si les dispositifs de communication ont la permission d'accéder les uns aux autres, (214), transmettre des données entre les dispositifs de communication par l'intermédiaire d'une passerelle de données en paquets.

2. Procédé selon la revendication 1, **caractérisé en ce qu'**un numéro de réseau numérique de services intégrés international d'abonné mobile (MSISDN), fait au moins partie de l'identification de l'utilisateur.

3. Procédé selon la revendication 1 ou la revendication 2, **caractérisé en ce que** les informations d'authentification sont stockées dans un module d'identité d'abonné.

4. Procédé selon la revendication 3, **caractérisé en ce que** le dispositif de communication présente un module d'identité d'abonné primaire et **en ce qu'**un dispositif de réception présente un second module d'identité d'abonné qui comprend une partie au moins des informations d'abonné du module d'identité d'abonné primaire.

5. Procédé selon l'une quelconque des revendications 1 à 4, **caractérisé en ce que** le serveur d'authentification est un serveur de module d'identité d'abonné à protocole d'authentification extensible (EAP - SIM).

6. Procédé selon l'une quelconque des revendications 1 à 5, **caractérisé en ce que** les informations d'authentification comprennent une identification de l'utilisateur et un mot de passe.

7. Procédé selon l'une quelconque des revendications 1 à 6, **caractérisé en ce que** les informations d'attribution d'accès sont stockées en tant que liste qui peut être mise à jour.

8. Procédé selon la revendication 7, **caractérisé en ce que** la liste qui comprend les informations d'attribution d'accès, peut être mise à jour par un utilisateur d'un dispositif de communication qui reçoit la transmission de données et à l'aide d'une application distincte.

9. Procédé selon la revendication 7 ou la revendication 8, **caractérisé en ce que** les informations d'attribution d'accès comprennent un numéro de réseau numérique de services intégrés international d'abonné mobile (MSISDN).

10. Procédé selon l'une quelconque des revendications 7 à 9, **caractérisé par le fait qu'**il comprend une étape consistant à :
fournir une interface utilisateur destinée à préparer et / ou à mettre à jour la liste d'informations d'attribution.

11. Procédé selon l'une quelconque des revendications 1 à 10, **caractérisé par le fait qu'**il comprend une étape consistant à :
fournir des services de sécurité de transmission de données et de sécurité d'accès à l'aide de la passerelle de données en paquets.

12. Système de communication destiné à fournir une connexion pour une délivrance de données, le système étant **caractérisé par le fait qu'**il comprend :
une passerelle de données en paquets (100) configurée de façon à : demander des informations d'authentification en liaison avec la création d'un tunnel de réseau privé virtuel pour des premier et second dispositifs de communication, transmettre les informations d'authentification à un serveur d'authentification, transmettre les informations d'identification de l'utilisateur obtenues à l'aide des informations d'authentification et d'adresses Web prédéterminées des dispositifs de communication à une base de données de mise en correspondance, transmettre les messages d'acceptation de connexion de réseau privé virtuel aux dispositifs de communication, recevoir une demande des services de transmission pour une délivrance de données, vérifier les informations d'attribution dans la base de données de mise en correspondance, et transmettre les données à l'un au moins des dispositifs de communication ;
un serveur d'authentification (102) configuré de façon à : récupérer des informations d'identification d'utilisateur prédéterminées sur la base des informations d'authentification, et transmettre les informations d'identification d'utilisateur à une base de données de mise en correspondance ; et
une base de données de mise en correspondance (116) configurée de façon à : stocker les informations d'identification de l'utilisateur et les adresses Web de chacun des dispositifs de communication en tant qu'informations mises en correspondance.

13. Système selon la revendication 12, **caractérisé en ce qu'**un numéro de réseau numérique de services intégrés internationaux d'abonné mobile (MSISDN), fait au moins partie de l'identification de l'utilisateur.

14. Système selon la revendication 12 ou la revendication 13, **caractérisé en ce que** les informations d'authentification sont stockées sur un module d'identité d'abonné.

15. Système selon la revendication 14, **caractérisé en ce que** le dispositif de communication présente un module d'identité d'abonné primaire et **en ce qu'**un dispositif de réception présente un second module d'identité d'abonné qui comprend une partie au moins des informations d'abonné du module d'identité d'abonné primaire.

16. Système selon l'une quelconque des revendications 12 à 15, **caractérisé en ce que** le serveur d'authentification est un serveur de module d'identité d'abonné à protocole d'authentification extensible (EAP - SIM).

17. Système selon l'une quelconque des revendications 12 à 16, **caractérisé en ce que** les informations d'authentification comprennent une identification de l'utilisateur et un mot de passe.

18. Système selon l'une quelconque des revendications 12 à 17, **caractérisé en ce que** les informations d'attribution d'accès sont stockées en tant que liste qui peut être mise à jour dans une base de données de mise en correspondance.

19. Système selon la revendication 18, **caractérisé en ce que** la liste qui comprend les informations d'attribution d'accès, peut être mise à jour par un utilisateur d'un dispositif de communication qui reçoit la transmission de données et à l'aide d'une application distincte.

20. Système selon la revendication 18 ou la revendication 19, **caractérisé en ce que** les informations d'attribution d'accès comprennent un numéro de réseau numérique de services intégrés international d'abonné mobile (MSISDN).

21. Système selon l'une quelconque des revendications 18 20, **caractérisé par le fait qu'**il est configuré de façon à :
fournir une interface utilisateur destinée à préparer et / ou à mettre à jour la liste d'informations d'attribution.

22. Système selon l'une quelconque des revendications 12 21, **caractérisé par le fait qu'**il est configuré de façon à :
fournir des services de sécurité de transmissions de données et de sécurité d'accès à l'aide de la passerelle de données en paquets.

23. Passerelle de données en paquets, **caractérisée par le fait qu'**elle comprend :
des moyens (302) destinés à demander des informations d'authentification en liaison avec la création d'un tunnel de réseau privé virtuel pour deux dispositifs de communication au moins ;
des moyens (302) destinés à transmettre les informations d'authentification à un serveur d'authentification, transmettre les informations d'identification de l'utilisateur obtenues à l'aide des informations d'authentification et des adresses Web des dispositifs de communication, à une base de données de mise en correspondance, transmettre les messages d'acceptation de connexion de réseau privé virtuel aux dispositifs de communication, et transmettre les données ; et
des moyens (302) destinés à recevoir une demande des services de transmission pour une délivrance de données à l'un au moins des dispositifs de communication.

24. Passerelle de données en paquets selon la revendication 23, **caractérisée en ce qu'**un numéro de réseau numérique de services intégrés internationaux d'abonné mobile (MSISDN), fait au moins partie de l'identification de l'utilisateur.

25. Passerelle de données en paquets selon la revendication 23 ou la revendication 24, **caractérisée en ce que** les informations d'authentification comprennent une identification de l'utilisateur et un mot de passe.

26. Passerelle de données en paquets selon l'une quelconque des revendications 23 à 25, **caractérisée par le fait qu'**elle comprend :
des moyens (302) destinés à fournir une interface utilisateur destinée à préparer et / ou à mettre à jour une liste d'informations d'attribution d'accès, ladite liste définissant vers lequel des dispositifs de communication de réception est permise une transmission de données, ladite liste étant stockée dans la base de données de mise en correspondance.

27. Passerelle de données en paquets selon l'une quelconque des revendications 23 à 26, **caractérisée par le fait qu'**elle comprend :
des moyens (302) destinés à fournir des services de sécurité de transmission de données et de sécurité d'accès.

28. Programme informatique qui code un programme informatique d'instructions destinées à exécuter un processus informatique **caractérisé par le fait qu'**il comprend :
la demande d'informations d'authentification en liaison avec la création d'un tunnel de réseau privé virtuel d'un premier et d'un second dispositifs de communication au moins ;
la transmission (404) des informations d'authentification à un serveur d'authentification ;
la réception (406) des informations d'identification de l'utilisateur et des adresses Web des dispositifs de communication en provenance du serveur d'authentification ;
la transmission (408) des informations d'identification de l'utilisateur et des adresses Web des dispositifs de communication à une base de données de mise en correspondance ;
la transmission (410) des messages d'acceptation de connexion de réseau privé virtuel aux dispositifs de communication ;
la réception (412) d'une demande des services de transmission pour une délivrance de données à l'un au moins des dispositifs de communication ;
la vérification (414) des informations d'attribution en provenance de la base de données de mise en correspondance ; et
si (416) le dispositif de communication à l'autorisation d'accéder à l'un au moins des dispositifs de communication ;
la transmission (418) des données.

29. Programme informatique selon la revendication 28, **caractérisé en ce que** les informations d'authentification comprennent une identification de l'utilisateur et un mot de passe.

30. Programme informatique selon la revendication 28 ou la revendication 29, **caractérisé par le fait qu'**il comprend :
La fourniture d'une interface utilisateur destinée à préparer et / ou à mettre à jour une liste d'informations d'attribution d'accès, ladite liste définissant vers lequel des dispositifs de communication de réception est permise une transmission de données, ladite liste étant stockée dans la base de données de mise en correspondance.

31. Programme informatique selon l'une quelconque des revendications 28 à 30, **caractérisé par le fait qu'**il comprend : la fourniture des services de sécurité de transmission de données et de sécurité d'accès.
